# EUROPEAN PATENT APPLICATION

(11) **EP 4 848 074 A1**
(43) Date of publication of application: **02.12.2026**
(21) Application number: 26179503.3
(22) Date of filing: 19.05.2026
(51) Int. Cl.: G06F 8/51, G06F 40/00, G06N 3/08, G06N 20/00, G06Q 10/06

(54) **METHOD AND APPARATUS FOR CONVERTING AUTOMATION SCENARIO**

(30) Priority: 27.05.2025 KR 20250068697
(71) Applicant: Samsung SDS Co., Ltd., Seoul 05510 (KR)
(72) Inventor: Park, Keun Taek, 05510 Seoul (KR)
(74) Representative: Grünecker Patent- und Rechtsanwälte PartG mbB

(57) **Abstract**

An automation scenario conversion method and apparatus are disclosed. According to an exemplary embodiment, a method for converting an automation scenario comprises: generating task procedure sentences in natural language corresponding to respective ones of a plurality of original actions included in a first automation scenario based on a first automation solution; generating one or more reconstructed task procedure sentences based on action specification information for a plurality of target actions defined in a second automation solution and the task procedure sentences; determining, from among the plurality of target actions, a mapping action for each of the one or more reconstructed task procedure sentences; and generating, based on the one or more reconstructed task procedure sentences and the action specification information for the mapping action, a second automation scenario based on the second automation solution.

## Description

### CROSS-REFERENCE TO RELATED APPLICATION

This application claims priority to and the benefit of Korean Patent Application No. 10-2025-0068697, filed on May 27, 2025, the disclosure of which is incorporated herein by reference in its entirety.

### BACKGROUND

### 1. Field

The disclosed embodiments relate to task automation technology.

### 2. Description of Related Art

Task automation technologies, such as Robotic Process Automation (RPA), are technologies that enable simple, repetitive tasks performed by a user on a PC to be executed automatically according to pre-defined rules, and primarily provide the ability to design and execute rules for carrying out repetitive operations such as sending and receiving emails, creating documents, and recording/re-entering data.

In general, because different task automation solutions differ in their executable actions and the properties associated with each action, in order to convert an automation scenario written based on a specific task automation solution into an automation scenario executable in another task automation solution, it was necessary to repeatedly and manually construct mapping tables for the actions of each task automation solution and perform conversion.

However, with this approach, the more complex the details of the actions and properties become, the more difficult it is to maintain the mapping tables, and when the specifications of existing actions in a task automation solution change or new actions are newly added and unmapped functions arise, additional development and testing are required, consuming significant time and cost.

Furthermore, omissions or errors in the mapping process are prone to occur, making rework inevitable on multiple occasions and ultimately resulting in lower accuracy and success rates in automation scenario conversion.

### SUMMARY

The disclosed embodiments are intended to provide a method and apparatus for converting an automation scenario.

According to an exemplary embodiment, there is provided a method for converting an automation scenario comprising: generating task procedure sentences in natural language corresponding to respective ones of a plurality of original actions included in a first automation scenario based on a first automation solution; generating one or more reconstructed task procedure sentences based on action specification information for a plurality of target actions defined in a second automation solution and the task procedure sentences; determining, from among the plurality of target actions, a mapping action for each of the one or more reconstructed task procedure sentences; and generating, based on the one or more reconstructed task procedure sentences and the action specification information for the mapping action, a second automation scenario based on the second automation solution.

The generating of the task procedure sentences may comprise: extracting, from the first automation scenario, action information and property information for each of the plurality of original actions; and generating the task procedure sentences corresponding to respective ones of the plurality of original actions based on the action information and the property information.

The action information may comprise at least one of an action identifier and an action description sentence, and the property information may comprise a property identifier and a property value.

The generating of the task procedure sentences may comprise: generating a first prompt requesting generation of the task procedure sentences corresponding to respective ones of the plurality of original actions based on the action information and the property information for each of the plurality of original actions; and providing the first prompt to a first generative artificial intelligence (AI) model to obtain, from the first generative AI model, the task procedure sentences generated based on the first prompt.

Each of the one or more reconstructed task procedure sentences may be a sentence reconstructed from the task procedure sentences based on action specification information for a specific target action among the plurality of target actions, so as to represent, in natural language, a task procedure performed by the specific target action.

The determining may comprise: when a task procedure to be performed according to a specific task procedure sentence, among the task procedure sentences corresponding to respective ones of the plurality of original actions, is performable using a specific target action among the plurality of target actions, generating one reconstructed task procedure sentence based on the specific task procedure sentence and action specification information for the specific target action; and determining the specific target action as the mapping action for the one reconstructed task procedure sentence.

The determining may comprise: when two or more task procedures to be performed according to each of two or more task procedure sentences, among the task procedure sentences corresponding to respective ones of the plurality of original actions, are performable using a specific target action among the plurality of target actions, generating one reconstructed task procedure sentence based on the two or more task procedure sentences and action specification information for the specific target action; and determining the specific target action as the mapping action for the one reconstructed task procedure sentence.

The determining may comprise: when a task procedure to be performed according to a specific task procedure sentence, among the task procedure sentences corresponding to respective ones of the plurality of original actions, is performable using two or more target actions among the plurality of target actions, generating two or more reconstructed task procedure sentences corresponding to the two or more target actions based on the specific task procedure sentence and action specification information for each of the two or more target actions; and determining each of the two or more target actions as the mapping action for the corresponding reconstructed task procedure sentence among the generated two or more reconstructed task procedure sentences.

The determining may comprise: generating a second prompt requesting generation of the one or more reconstructed task procedure sentences and determination of the mapping action for each of the one or more reconstructed task procedure sentences from among the plurality of target actions, based on the action specification information for the plurality of target actions and the task procedure sentences corresponding to respective ones of the plurality of original actions; and providing the second prompt to a second generative AI model to obtain, from the second generative AI model, the one or more reconstructed task procedure sentences and the mapping action generated based on the second prompt.

The generating of the second automation scenario may comprise: determining property values for one or more properties of the mapping action based on the one or more reconstructed task procedure sentences and the action specification information for the mapping action; and generating the second automation scenario based on the mapping action and the determined property values.

The property values for the one or more properties of the mapping action may comprise at least one of a property value extracted from a reconstructed task procedure sentence corresponding to the mapping action and a default property value included in the action specification information for the mapping action.

The generating of the second automation scenario based on the mapping action and the determined property values may comprise: generating a third prompt requesting generation of the second automation scenario based on the mapping action and the determined property values; and providing the third prompt to a third generative AI model to obtain, from the third generative AI model, the second automation scenario generated based on the third prompt.

The generating of the second automation scenario may comprise: generating a fourth prompt requesting determination of property values for one or more properties of the mapping action based on the one or more reconstructed task procedure sentences and the action specification information for the mapping action, and generation of the second automation scenario based on the mapping action and the property values for the one or more properties; and providing the fourth prompt to a fourth generative AI model to obtain, from the fourth generative AI model, the second automation scenario generated based on the fourth prompt.

According to an exemplary embodiment, there is provided an apparatus for converting an automation scenario comprising: one or more memories; and one or more processors, wherein the one or more processors are configured to: generate task procedure sentences in natural language corresponding to respective ones of a plurality of original actions included in a first automation scenario based on a first automation solution; generate one or more reconstructed task procedure sentences based on action specification information for a plurality of target actions defined in a second automation solution and the task procedure sentences; determine, from among the plurality of target actions, a mapping action for each of the one or more reconstructed task procedure sentences; and generate, based on the one or more reconstructed task procedure sentences and the action specification information for the mapping action, a second automation scenario based on the second automation solution.

The one or more processors may be further configured to: extract, from the first automation scenario, action information and property information for each of the plurality of original actions; and generate the task procedure sentences corresponding to respective ones of the plurality of original actions based on the action information and the property information.

The action information may comprise at least one of an action identifier and an action description sentence, and the property information may comprise a property identifier and a property value.

The one or more processors may be further configured to: generate a first prompt requesting generation of the task procedure sentences corresponding to respective ones of the plurality of original actions based on the action information and the property information for each of the plurality of original actions; and provide the first prompt to a first generative artificial intelligence (AI) model to obtain, from the first generative AI model, the task procedure sentences generated based on the first prompt.

Each of the one or more reconstructed task procedure sentences may be a sentence reconstructed from the task procedure sentences based on action specification information for a specific target action among the plurality of target actions, so as to represent, in natural language, a task procedure performed by the specific target action.

The one or more processors may be further configured to: when a task procedure to be performed according to a specific task procedure sentence, among the task procedure sentences corresponding to respective ones of the plurality of original actions, is performable using a specific target action among the plurality of target actions, generate one reconstructed task procedure sentence based on the specific task procedure sentence and action specification information for the specific target action; and determine the specific target action as the mapping action for the one reconstructed task procedure sentence.

The one or more processors may be further configured to: when two or more task procedures to be performed according to each of two or more task procedure sentences, among the task procedure sentences corresponding to respective ones of the plurality of original actions, are performable using a specific target action among the plurality of target actions, generate one reconstructed task procedure sentence based on the two or more task procedure sentences and action specification information for the specific target action; and determine the specific target action as the mapping action for the one reconstructed task procedure sentence.

The one or more processors may be further configured to: when a task procedure to be performed according to a specific task procedure sentence, among the task procedure sentences corresponding to respective ones of the plurality of original actions, is performable using two or more target actions among the plurality of target actions, generate two or more reconstructed task procedure sentences corresponding to the two or more target actions based on the specific task procedure sentence and action specification information for each of the two or more target actions; and determine each of the two or more target actions as the mapping action for the corresponding reconstructed task procedure sentence among the generated two or more reconstructed task procedure sentences.

The one or more processors may be further configured to: generate a second prompt requesting generation of the one or more reconstructed task procedure sentences and determination of the mapping action for each of the one or more reconstructed task procedure sentences from among the plurality of target actions, based on the action specification information for the plurality of target actions and the task procedure sentences corresponding to respective ones of the plurality of original actions; and provide the second prompt to a second generative AI model to obtain, from the second generative AI model, the one or more reconstructed task procedure sentences and the mapping action generated based on the second prompt.

The one or more processors may be further configured to: determine property values for one or more properties of the mapping action based on the one or more reconstructed task procedure sentences and the action specification information for the mapping action; and generate the second automation scenario based on the mapping action and the determined property values.

The property values for the one or more properties of the mapping action may comprise at least one of a property value extracted from a reconstructed task procedure sentence corresponding to the mapping action and a default property value included in the action specification information for the mapping action.

The one or more processors may be further configured to: generate a third prompt requesting generation of the second automation scenario based on the mapping action and the determined property values; and provide the third prompt to a third generative AI model to obtain, from the third generative AI model, the second automation scenario generated based on the third prompt.

The one or more processors may be further configured to: generate a fourth prompt requesting determination of property values for one or more properties of the mapping action based on the one or more reconstructed task procedure sentences and the action specification information for the mapping action, and generation of the second automation scenario based on the mapping action and the property values for the one or more properties; and provide the fourth prompt to a fourth generative AI model to obtain, from the fourth generative AI model, the second automation scenario generated based on the fourth prompt.

According to the disclosed embodiments, when converting an automation scenario based on a specific automation solution into an automation scenario based on another automation solution, by utilizing semantic-based analysis using natural language, differences existing between automation solutions can be flexibly bridged, enabling efficient conversion with less time and cost compared to the conventional mapping-table-based approach.

### BRIEF DESCRIPTION OF THE DRAWINGS

FIG. 1 is a diagram illustrating an exemplary configuration of an automation scenario conversion system according to one embodiment.
FIG. 2 is a block diagram illustrating the configuration of a scenario conversion apparatus according to one embodiment.
FIG. 3 is a diagram illustrating an example of a first automation scenario written in JSON format.
FIG. 4 is a diagram for exemplarily explaining a task procedure sentence according to one embodiment.
FIG. 5 is a diagram illustrating an example of a first template according to one embodiment.
FIG. 6 is a diagram illustrating an example of action specification information for a target action according to one embodiment.
FIG. 7 is a diagram illustrating an example of a reconstructed task procedure sentence and a mapping action for the reconstructed task procedure sentence according to one embodiment.
FIG. 8 is a diagram illustrating an example of a second template according to one embodiment.
FIG. 9 is a diagram illustrating an example of a third template according to one embodiment.
FIG. 10 is a diagram illustrating an example of a fourth template according to one embodiment.
FIG. 11 is a flowchart of an automation scenario conversion method according to one embodiment.
FIG. 12 is a flowchart illustrating a task procedure sentence generation method according to one embodiment.
FIG. 13 is a flowchart illustrating a reconstructed task procedure sentence generation and mapping action determination method according to one embodiment.
FIG. 14 is a flowchart illustrating a second automation scenario generation method according to one embodiment.
FIG. 15 is a flowchart illustrating a second automation scenario generation method according to another embodiment.
FIG. 16 is a block diagram for illustrating a computing environment comprising a computing device according to one embodiment.

### DETAILED DESCRIPTION

Hereinafter, a specific embodiment will be described with reference to the drawings. The following detailed description is provided to aid in a comprehensive understanding of the methods, apparatus and/or systems described herein. However, this is only an example, and the disclosed embodiments are not limited thereto.

In describing the embodiments, when it is determined that a detailed description of related known technologies related to the present disclosure may unnecessarily obscure the subject matter of the disclosed embodiments, a detailed description thereof will be omitted. In addition, terms to be described later are terms defined in consideration of functions in the present disclosure, which may vary according to the intention or custom of users or operators. Therefore, the definition should be made based on the contents throughout this specification. The terms used in the detailed description are only for describing embodiments, and should not be limiting. Unless explicitly used otherwise, expressions in the singular form include the meaning of the plural form. In this description, expressions such as "comprising" or "including" are intended to refer to certain features, numbers, steps, actions, elements, some or combination thereof, and it is not to be construed to exclude the presence or possibility of one or more other features, numbers, steps, actions, elements, parts or combinations thereof, other than those described.

Hereinafter, an "automation solution" refers broadly to software, a platform, or a system for automatically performing repetitive or rule-based tasks performed on a computing device, such as Robotic Process Automation (RPA) and Hyperautomation.

Hereinafter, an "automation scenario" refers to information that defines, in a form that the automation solution can understand and execute, a task to be performed by the automation solution (hereinafter, an "automation target task"). Specifically, an automation scenario may be a file or structured data in which automation target tasks are expressed in a script format executable by the automation solution (for example, XML (eXtensible Markup Language), JSON (JavaScript Object Notation), CSV (Comma-Separated Values), etc.) using actions and properties defined in the automation solution.

Hereinafter, an "action" refers to a command defined to cause the automation solution to perform a specific functional operation (for example, mouse click, key input, file open, data input, etc.).

Hereinafter, a "property" refers to a setting item (for example, a file path, an input value, an output value, etc.) to which a specific value (hereinafter, a "property value") needs to be assigned in order to execute a specific action defined in the automation solution, and one or more of the plurality of actions defined in the automation solution may have one or more properties defined therein.

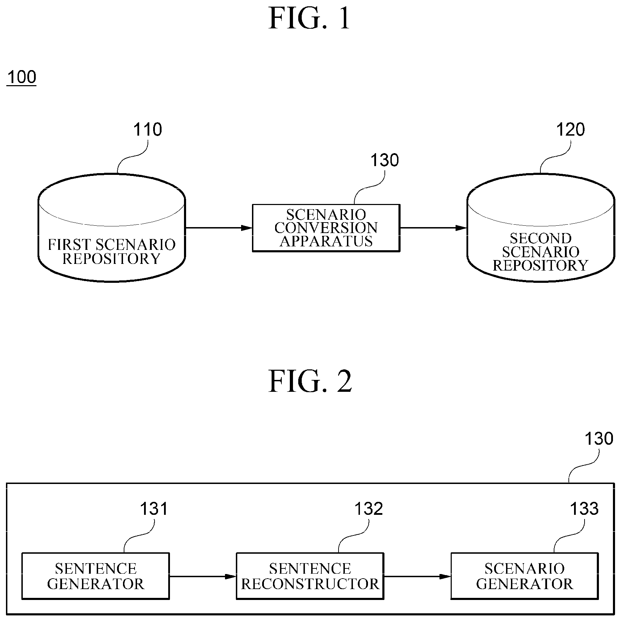

FIG. 1 is a diagram illustrating an exemplary configuration of an automation scenario conversion system according to one embodiment.

Referring to FIG. 1, an automation scenario conversion system 100 according to one embodiment comprises a first scenario repository 110, a second scenario repository 120, and a scenario conversion apparatus 130.

The first scenario repository 110 is a data storage space in which a first automation scenario based on the first automation solution (hereinafter, the "first automation scenario") is stored. The second scenario repository 120 is a data storage space for storing a second automation scenario after the scenario conversion apparatus 130 converts the first automation scenario into a second automation scenario based on the second automation solution (hereinafter, the "second automation scenario").

In this case, the first automation solution and the second automation solution refer to solutions that differ in at least one of a plurality of actions and a plurality of properties defined in each automation solution. Specifically, the second automation solution may be a solution that comprises one or more actions or properties not defined in the first automation solution.

For example, the first automation solution and the second automation solution may be solutions developed by different developers. As another example, the second automation solution may be an automation solution that improves upon the first automation solution by modifying at least one of the plurality of actions and plurality of properties defined in the first automation solution, or by adding new actions or properties not defined in the first automation solution to the first automation solution.

Meanwhile, the first automation scenario refers to an automation scenario written based on the actions and properties defined in the first automation solution. The second automation scenario refers to an automation scenario written based on the actions and properties defined in the second automation solution.

It should be noted that the configuration of the automation scenario conversion system 100 shown in FIG. 1 is exemplary and is not necessarily limited to the example shown in FIG. 1.

In addition, the first scenario repository 110 and the second scenario repository 120 may be physically separate components, but are not necessarily limited thereto, and may also be logically separate data storage spaces within a single storage device that is not physically separated.

FIG. 2 is a block diagram illustrating the configuration of a scenario conversion apparatus according to one embodiment.

Referring to FIG. 2, a scenario conversion apparatus 130 according to one embodiment comprises a sentence generator 131, a sentence reconstructor 132, and a scenario generator 133.

The sentence generator 131 generates , for each of one or more actions (hereinafter, "original actions") included in the first automation scenario, a task procedure sentence in natural language corresponding to the action (hereinafter, a "task procedure sentence").

According to one embodiment, the sentence generator 131 may extract, from the first automation scenario, action information and property information for each of the plurality of original actions.

In this case, according to one embodiment, the action information for each original action may comprise at least one of an action identifier (for example, an action name) for each original action and an action description sentence, which is a natural language sentence describing the function performed by each original action (hereinafter, "action description sentence"). In addition, according to one embodiment, the property information for each original action may comprise a property identifier (for example, a property name) for each property of each original action and a property value.

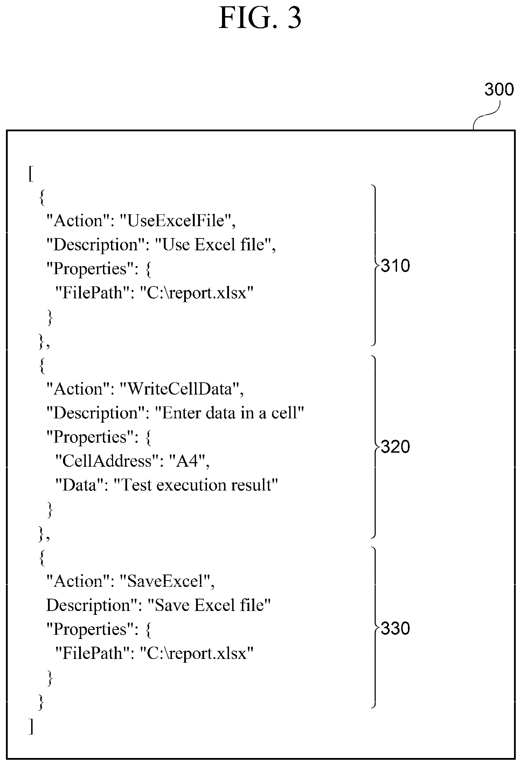

FIG. 3 is a diagram illustrating an example of a first automation scenario 300 written in JSON format.

When the first automation scenario 300 is written in a script format having a key-value pair structure, such as JSON or XML, as in the example shown in FIG. 3, the sentence generator 131 may analyze the key-value pairs included in the first automation scenario 300 to generate action information and property information for each original action.

Specifically, the exemplary first automation scenario 300 shown in FIG. 3 comprises three action objects (310, 320, 330) corresponding to individual task procedures to be performed sequentially. Each action object (310, 320, 330) comprises an "Action" field, a "Description" field, and a "properties" field. In addition, the "Action" field comprises an action identifier for the original action to be executed to perform the task procedure; the "Description" field comprises an action description sentence for the original action; and the "Properties" field comprises property values for one or more properties of the original action in the form of key-value pairs.

The sentence generator 131 may extract the action identifier "UseExcelFile" written in the "Action" field of the first action object 310 and the action description sentence "Use Excel file" included in the "Description" field as action information for the original action for performing the first task procedure, and extract the property identifier "FilePath" and property value "C:\\report.xlsx" written in the "Properties" field of the first action object 310 as property information for the original action for performing the first task procedure.

In addition, the sentence generator 131 may extract the action identifier "WriteCellData" written in the "Action" field of the second action object 320 and the action description sentence "Enter data in a cell" included in the "Description" field as action information for the original action for performing the second task procedure, and extract the property identifier "CellAddress", the property value "A4" for the property identifier "CellAddress", the property identifier "Data", and the property value "Test execution result" for the property identifier "Data" from the "Properties" field of the second action object 320 as property information for the original action for performing the second task procedure.

In addition, the sentence generator 131 may extract the action identifier "SaveExcel" written in the "Action" field of the third action object 330 and the action description sentence "Save Excel file" included in the "Description" field as action information for the original action for performing the third task procedure, and extract the property identifier "FilePath" and property value "C:\\report.xlsx" written in the "Properties" field of the third action object 330 as property information for the original action for performing the third task procedure.

Meanwhile, the sentence generator 131 may generate a task procedure sentence corresponding to each original action based on the action information and property information of each original action extracted from the first automation scenario.

In this case, a task procedure sentence refers to a sentence that represents, in natural language, the task procedure performed by the corresponding original action, based on the action information and property information of the corresponding original action.

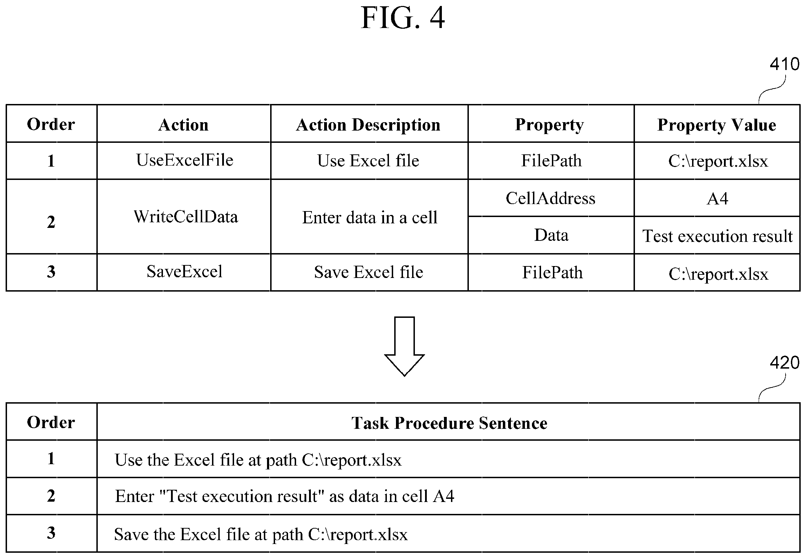

FIG. 4 is a diagram for exemplarily explaining a task procedure sentence according to one embodiment.

Specifically, FIG. 4 illustrates a list 410 comprising action information and property information for each original action extracted from the first automation scenario 300 shown in FIG. 3, and a list 420 comprising task procedure sentences for each original action.

The sentence generator 131 may generate the task procedure sentence "Use the Excel file at path C:\\report.xlsx." based on the action information (i.e., action identifier "UseExcelFile" and action description sentence "Use Excel file") and property information (i.e., property identifier "FilePath" and property value "C:\\report.xlsx" for "FilePath") of the first original action included in the list 410.

In addition, the sentence generator 131 may generate the task procedure sentence "Enter \"Test execution result\" as data in cell A4." based on the action information (i.e., action identifier "WriteCellData" and action description sentence "Enter data in a cell") and property information (i.e., property identifier "CellAddress", property value "A4" for "CellAddress", property identifier "Data", and property value "Test execution result" for "Data") of the second original action included in the list 410.

In addition, the sentence generator 131 may generate the task procedure sentence "Save the Excel file at path C:\\report.xlsx." based on the action information (i.e., action identifier "SaveExcel" and action description sentence "Save Excel file") and property information (i.e., property identifier "FilePath" and property value "C:\\report.xlsx" for "FilePath") of the third original action included in the list 410.

Meanwhile, according to one embodiment, the sentence generator 131 may use a first generative AI model to generate a task procedure sentence corresponding to each original action from the action information and property information for each original action. In this case, the first generative AI model may be, for example, a large language model (LLM) pre-trained or fine-tuned based on an artificial neural network architecture such as a transformer. However, the first generative AI model is not necessarily limited thereto and may be various types of artificial neural network-based models configured to generate a corresponding natural language sentence based on input data comprising action information and property information.

Specifically, according to one embodiment, the sentence generator 131 may generate a prompt (hereinafter, a "first prompt") requesting generation of a task procedure sentence corresponding to each original action based on the action information and property information of each original action extracted from the first automation scenario. In addition, the sentence generator 131 may provide the generated first prompt to the first generative AI model to obtain, from the first generative AI model, task procedure sentences generated based on the first prompt.

In this case, according to one embodiment, the sentence generator 131 may generate the first prompt using a first template. In this case, the first template may be structured text data pre-written by a user to enable the first generative AI model to generate prompts in a consistent format based on the action information and property information for an original action.

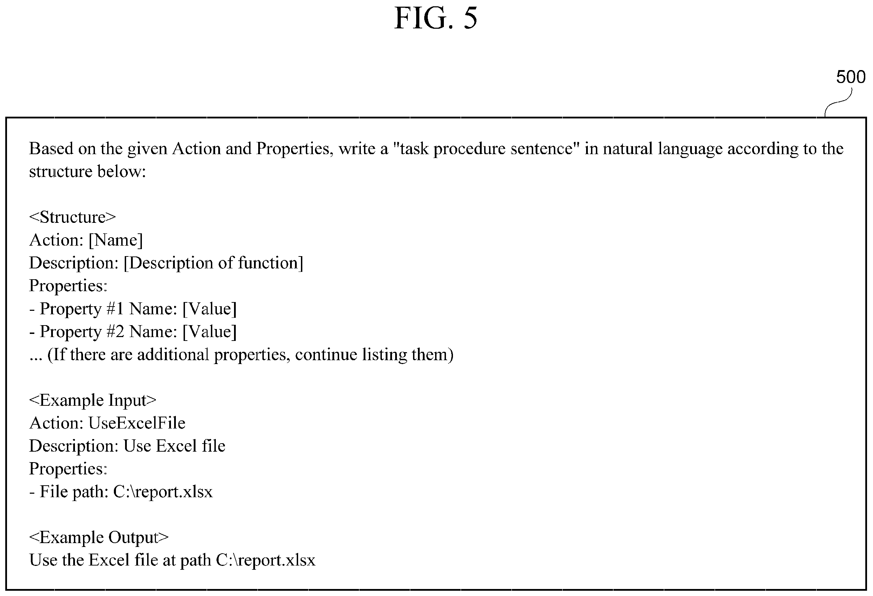

FIG. 5 is a diagram illustrating an example of a first template according to one embodiment.

As in the example shown in FIG. 5, the first template 500 may be a message pre-written in the form of a few-shot prompt comprising the structure of action information and property information to be provided to the first generative AI model for generating task procedure sentences, example inputs, and example outputs for the example inputs.

In this case, the example inputs comprise examples of action information and property information to be provided to the first generative AI model, and the example outputs may comprise examples of task procedure sentences that the first generative AI model should generate for the example inputs.

Referring again to FIG. 2, the sentence reconstructor 132 generates one or more reconstructed task procedure sentences based on action specification information for a plurality of actions defined in the second automation solution (hereinafter, "target actions") and task procedure sentences corresponding to respective ones of the plurality of original actions, and determines a mapping action for each of the one or more reconstructed task procedure sentences from among the plurality of target actions.

In this case, according to one embodiment, the action specification information may comprise one or more of the following: an action identifier for each target action, an action description sentence for each target action, a property identifier for each property of each target action, a property description sentence for each property of each target action, property value constraints for each property of each target action (for example, the range of permissible property values, the data format of property values, etc.), and a default property value for each property of each target action.

According to one embodiment, the action specification information may be, for example, information distributed by the developer of the second automation solution, or information collected from a plurality of pre-collected automation scenarios written based on the second automation solution. However, the method of obtaining the action specification information is not necessarily limited to a specific example.

Meanwhile, each of the one or more reconstructed task procedure sentences may be a sentence reconstructed from the one or more task procedure sentences based on the action specification information for a specific target action among the plurality of target actions, so as to represent, in natural language, a task procedure performed by the specific target action.

According to one embodiment, when a task procedure to be performed according to a specific task procedure sentence is performable using a specific target action, the sentence reconstructor 132 may generate one reconstructed task procedure sentence based on the action specification information for the specific target action and the specific task procedure sentence. In this case, the sentence reconstructor 132 may determine the specific target action as the mapping action for the generated one reconstructed task procedure sentence.

In addition, according to one embodiment, when two or more task procedures to be performed according to each of two or more task procedure sentences are performable using a specific target action, the sentence reconstructor 132 may generate one reconstructed task procedure sentence based on the action specification information for the specific target action and the two or more task procedure sentences. In this case, the sentence reconstructor 132 may determine the specific target action as the mapping action for the generated one reconstructed task procedure sentence.

In addition, according to one embodiment, when a task procedure to be performed according to a specific task procedure sentence is performable using two or more target actions, the sentence reconstructor 132 may generate two or more reconstructed task procedure sentences corresponding to the two or more target actions based on the action specification information for each of the two or more target actions and the specific task procedure sentence. In this case, the sentence reconstructor 132 may determine each of the two or more target actions as the mapping action for the corresponding reconstructed task procedure sentence among the generated two or more reconstructed task procedure sentences.

In addition, according to one embodiment, when there is no target action among the plurality of target actions that can perform the task procedure to be performed according to a specific task procedure sentence, the sentence reconstructor 132 may generate a reconstructed task procedure sentence identical to the specific task procedure sentence. In this case, the sentence reconstructor 132 may determine a pre-configured action not included among the plurality of target actions as the mapping action for the reconstructed task procedure sentence. In this case, the pre-configured action may be an action pre-defined by the user to be mapped when there is no target action that can be mapped to the reconstructed task procedure sentence.

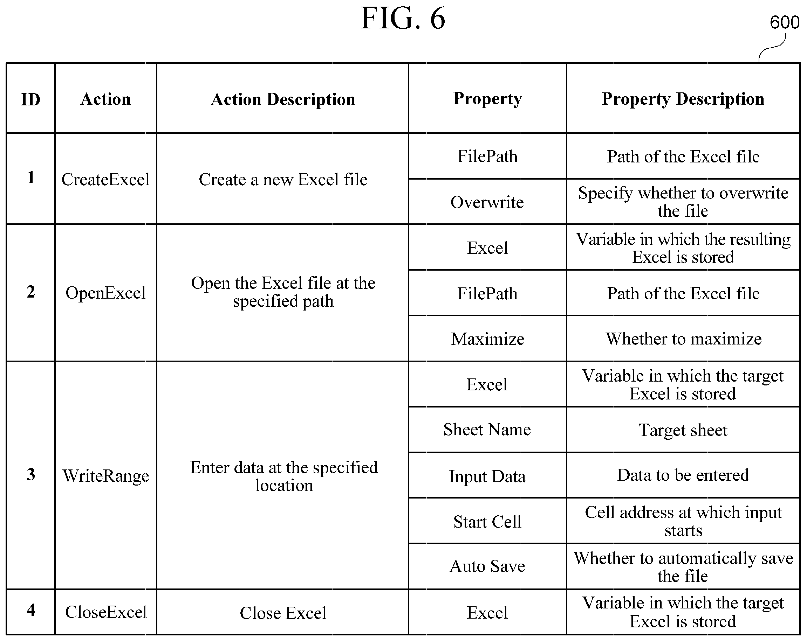

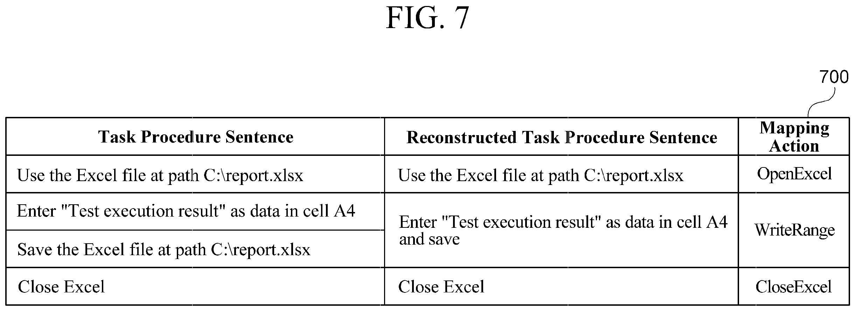

FIG. 6 is a diagram illustrating an example of action specification information for a target action according to one embodiment, and FIG. 7 is a diagram illustrating an example of a reconstructed task procedure sentence and a mapping action for the reconstructed task procedure sentence according to one embodiment.

Referring to FIGS. 6 and 7, among the target actions shown in FIG. 6, "OpenExcel" comprises a property "File Path" to which the path of an Excel file is assigned as a property value, and is capable of performing the function of opening the Excel file at the file path assigned as the property value of "File Path". Accordingly, the task procedure according to "Open the Excel file at path C:\\report.xlsx." among the task procedure sentences shown in FIG. 7 can be performed using "OpenExcel". Therefore, the sentence reconstructor 132 may generate the reconstructed task procedure sentence "Open the Excel file at path C:\\report.xlsx." for "Open the Excel file at path C:\\report.xlsx.", and may determine "OpenExcel" as the mapping action for the reconstructed task procedure sentence.

In addition, among the target actions shown in FIG. 6, "WriteRange" comprises a property "Input Data" to which data to be entered is assigned as a property value, a property "Start Cell" to which the cell address at which entry starts is assigned as a property value, and a property "Auto Save" to which whether to automatically save the file is assigned as a property value. "WriteRange" is capable of performing the function of entering the data assigned as the property value of "Input Data" at the cell address assigned as the property value of "Start Cell", and then automatically saving the Excel file according to the property value assigned to "Auto Save". Accordingly, the two task procedures according to each of "Enter \"Test execution result\" as data in cell A4." and "Save the Excel file at path C:\\report.xlsx." among the task procedure sentences shown in FIG. 7 can be performed using "WriteRange". Therefore, the sentence reconstructor 132 may generate the reconstructed task procedure sentence "Enter \"Test execution result\" as data in cell A4 and save." for "Enter \"Test execution result\" as data in cell A4." and "Save the Excel file at path C:\\report.xlsx.", and may determine "WriteRange" as the mapping action for the reconstructed task procedure sentence.

In addition, among the target actions shown in FIG. 6, "CloseExcel" is capable of performing the function of closing Excel. Accordingly, the task procedure according to "Close Excel." among the task procedure sentences shown in FIG. 7 can be performed using "CloseExcel". Therefore, the sentence reconstructor 132 may generate the reconstructed task procedure sentence "Close Excel." for "Close Excel.", and may determine "CloseExcel" as the mapping action for the reconstructed task procedure sentence.

Meanwhile, according to one embodiment, the sentence reconstructor 132 may use a second generative AI model to generate one or more reconstructed task procedure sentences and determine the mapping action for each of the one or more reconstructed task procedure sentences. In this case, the second generative AI model may be the same model as the first generative AI model. However, the second generative AI model is not necessarily limited thereto and, depending on the embodiment, may be a separate artificial neural network-based model different from the first generative AI model.

Specifically, according to one embodiment, the sentence reconstructor 132 may generate a prompt (hereinafter, a "second prompt") requesting generation of the one or more reconstructed task procedure sentences and determination of the mapping actions for the generated reconstructed task procedure sentences, based on action specification information for the plurality of target actions and one or more task procedure sentences. In addition, the sentence reconstructor 132 may provide the generated second prompt to the second generative AI model to obtain, from the second generative AI model, one or more reconstructed task procedure sentences and mapping actions for each of the one or more reconstructed task procedure sentences, generated based on the second prompt.

In this case, according to one embodiment, the sentence reconstructor 132 may generate the second prompt using a pre-defined second template. The second template may be structured text data pre-written by a user to enable the second generative AI model to generate prompts in a consistent format based on action specification information for a plurality of target actions and one or more task procedure sentences.

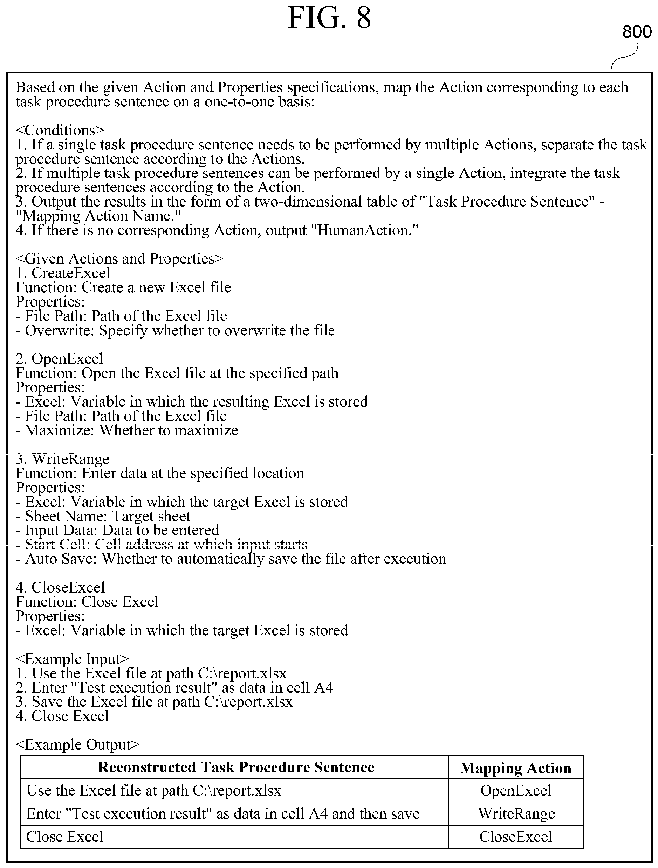

FIG. 8 is a diagram illustrating an example of a second template according to one embodiment.

As in the example shown in FIG. 8, the second template 800 may be a message pre-written in the form of a few-shot prompt comprising the action specification information for a plurality of target actions, example inputs, and example outputs for the example inputs.

In this case, the example inputs comprise examples of task procedure sentences to be provided to the second generative AI model, and the example outputs may comprise examples of the reconstructed task procedure sentences and mapping actions for the reconstructed task procedure sentences that the second generative AI model should generate for the example inputs.

The scenario generator 133 generates a second automation scenario based on the second automation solution, based on the one or more reconstructed task procedure sentences and action specification information for the mapping action of each of the one or more reconstructed task procedure sentences.

According to one embodiment, the scenario generator 133 may determine property values for one or more properties of each mapping action based on the one or more reconstructed task procedure sentences and action specification information for the mapping action of each of the one or more reconstructed task procedure sentences. In addition, the scenario generator 133 may generate the second automation scenario based on each mapping action and the property values for one or more properties of each mapping action.

In this case, according to one embodiment, the property values for one or more properties of each mapping action may comprise at least one of a property value extracted from the reconstructed task procedure sentence corresponding to each mapping action and a default property value included in the action specification information for each mapping action.

Specifically, the scenario generator 133 may, when the reconstructed task procedure sentence corresponding to a specific mapping action comprises a property value for a specific property of the specific mapping action, determine the property value as the property value for the specific property. In addition, the scenario generator 133 may, when the reconstructed task procedure sentence corresponding to a specific mapping action does not comprise a property value for a specific property of the specific mapping action, determine the default property value for the specific property included in the action specification information for the specific mapping action as the property value for the specific property.

In this case, according to one embodiment, the scenario generator 133 may use an AI-based property value extraction model pre-trained to extract property values for one or more properties of the mapping action from the reconstructed task procedure sentence and the action specification information for the mapping action corresponding to the reconstructed task procedure sentence, to extract the property values for one or more properties of each mapping action, and may determine the extracted property values as the property values for one or more properties of each mapping action.

Meanwhile, according to one embodiment, the scenario generator 133 may use a third generative AI model to generate the second automation scenario based on each mapping action and the property values for one or more properties of each mapping action. In this case, the third generative AI model may be the same model as the first generative AI model or the second generative AI model. However, the third generative AI model is not necessarily limited thereto and, depending on the embodiment, may be a separate artificial neural network-based model different from the first generative AI model and the second generative AI model.

Specifically, according to one embodiment, the scenario generator 133 may generate a prompt (hereinafter, a "third prompt") requesting generation of the second automation scenario based on one or more mapping actions and the property values for one or more properties of the one or more mapping actions. In addition, the scenario generator 133 may provide the generated third prompt to the third generative AI model to obtain, from the third generative AI model, the second automation scenario generated based on the third prompt.

In this case, according to one embodiment, the scenario generator 133 may generate the third prompt using a pre-defined third template. The third template may be structured text data pre-written by a user to enable the third generative AI model to generate prompts in a consistent format based on one or more mapping actions and the property values for one or more properties of the one or more mapping actions.

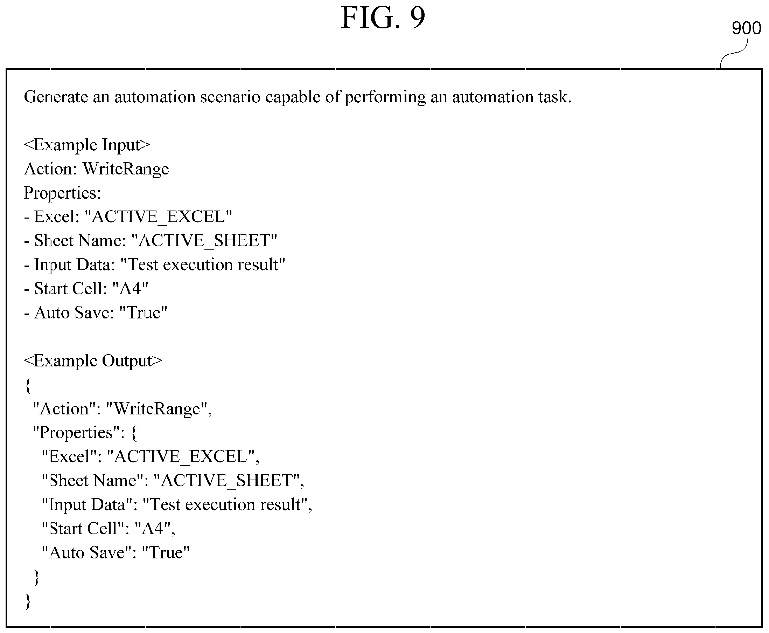

FIG. 9 is a diagram illustrating an example of a third template according to one embodiment.

As in the example shown in FIG. 9, the third template 900 may be a message pre-written in the form of a few-shot prompt comprising example inputs and example outputs for the example inputs.

In this case, the example inputs comprise an action identifier for a mapping action, property identifiers for one or more properties of the mapping action, and property values for each of the one or more properties of the mapping action, and the example outputs may comprise examples of the automation scenario that the third generative AI model should generate for the example inputs.

Meanwhile, according to another embodiment, the scenario generator 133 may use a fourth generative AI model to generate the second automation scenario based on one or more reconstructed task procedure sentences and the action specification information for the mapping action of each of the one or more reconstructed task procedure sentences. In this case, the fourth generative AI model may be the same model as the first generative AI model or the second generative AI model. However, the fourth generative AI model is not necessarily limited thereto and, depending on the embodiment, may be a separate artificial neural network-based model different from the first generative AI model and the second generative AI model.

Specifically, according to one embodiment, the scenario generator 133 may generate a prompt (hereinafter, a "fourth prompt") requesting determination of property values for one or more properties of each mapping action based on the one or more reconstructed task procedure sentences and the action specification information for the mapping action of each of the one or more reconstructed task procedure sentences, and generation of the second automation scenario based on each mapping action and the property values for the one or more properties. In addition, the scenario generator 133 may provide the generated fourth prompt to the fourth generative AI model to obtain, from the fourth generative AI model, the second automation scenario generated based on the fourth prompt.

In this case, according to one embodiment, the scenario generator 133 may generate the fourth prompt using a pre-defined fourth template. Specifically, the fourth template may be structured text data pre-written by a user to enable the fourth generative AI model to determine property values for one or more properties of each mapping action based on the one or more reconstructed task procedure sentences and the action specification information for the mapping action corresponding to each of the one or more reconstructed task procedure sentences, and to generate prompts in a consistent format based on each mapping action and the property values for the one or more properties of each mapping action.

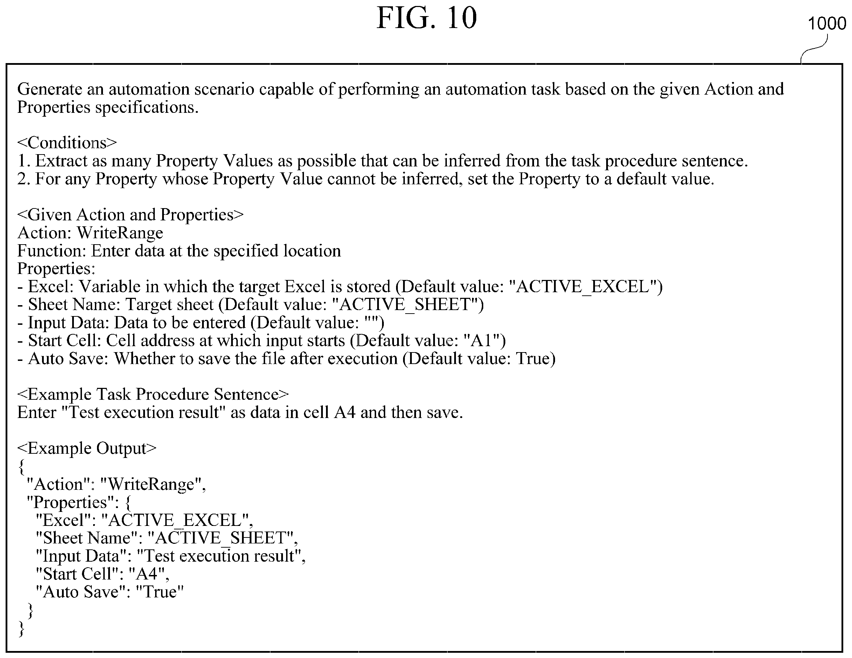

FIG. 10 is a diagram illustrating an example of a fourth template according to one embodiment.

As in the example shown in FIG. 10, the fourth template 1000 may be a message pre-written in the form of a few-shot prompt comprising the action specification information for the mapping action, example inputs, and example outputs for the example inputs.

In this case, the example inputs comprise reconstructed task procedure sentences, and the example outputs may comprise examples of the automation scenario that the fourth generative AI model should generate for the example inputs.

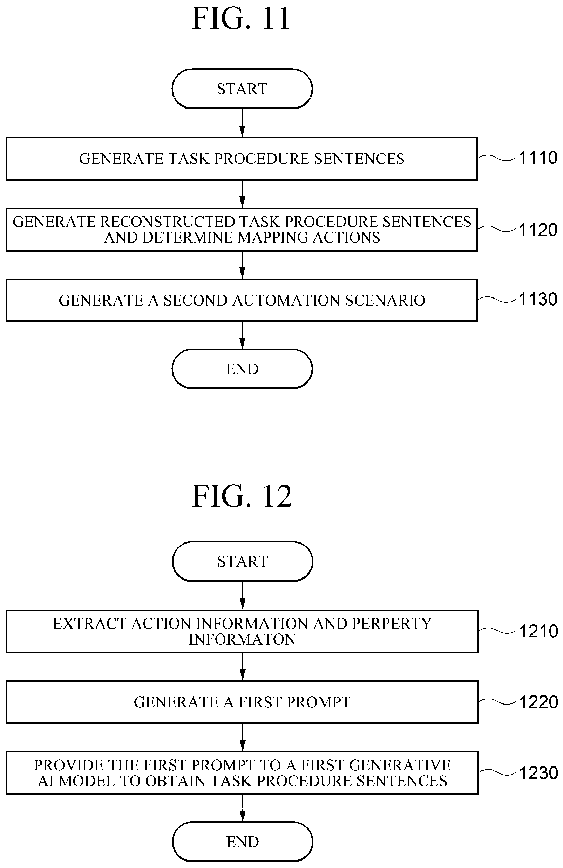

FIG. 11 is a flowchart of an automation scenario conversion method according to one embodiment.

The method shown in FIG. 11 may be performed by, for example, the scenario conversion apparatus 130 shown in FIG. 2.

Referring to FIG. 11**,** the scenario conversion apparatus 130 generates task procedure sentences in natural language corresponding to respective ones of a plurality of original actions included in a first automation scenario based on the first automation solution (1110).

In this case, according to one embodiment, the scenario conversion apparatus 130 may extract, from the first automation scenario, action information and property information for each of the plurality of original actions, and generate task procedure sentences corresponding to respective ones of the plurality of original actions based on the extracted action information and property information.

Thereafter, the scenario conversion apparatus 130 generates one or more reconstructed task procedure sentences based on action specification information for a plurality of target actions defined in the second automation solution and task procedure sentences corresponding to respective ones of the plurality of original actions, and determines a mapping action for each of the one or more reconstructed task procedure sentences from among the plurality of target actions (1120).

In this case, according to one embodiment, each of the one or more reconstructed task procedure sentences may be a sentence reconstructed from the task procedure sentences corresponding to respective ones of the plurality of original actions based on the action specification information for a specific target action among the plurality of target actions, so as to represent, in natural language, a task procedure performed by the specific target action.

In addition, according to one embodiment, the scenario conversion apparatus 130 may, when a task procedure to be performed according to a specific task procedure sentence among the task procedure sentences corresponding to respective ones of the plurality of original actions is performable using a specific target action among the plurality of target actions, generate one reconstructed task procedure sentence based on the specific task procedure sentence and the action specification information for the specific target action, and determine the specific target action as the mapping action for the generated one reconstructed task procedure sentence.

In addition, according to one embodiment, the scenario conversion apparatus 130 may, when two or more task procedures to be performed according to each of two or more task procedure sentences among the task procedure sentences corresponding to respective ones of the plurality of original actions are performable using a specific target action among the plurality of target actions, generate one reconstructed task procedure sentence based on the two or more task procedure sentences and the action specification information for the specific target action, and determine the specific target action as the mapping action for the generated one reconstructed task procedure sentence.

In addition, according to one embodiment, the scenario conversion apparatus 130 may, when a task procedure to be performed according to a specific task procedure sentence among the task procedure sentences corresponding to respective ones of the plurality of original actions is performable using two or more target actions among the plurality of target actions, generate two or more reconstructed task procedure sentences corresponding to the two or more target actions based on the specific task procedure sentence and the action specification information for each of the two or more target actions, and determine each of the two or more target actions as the mapping action for the corresponding reconstructed task procedure sentence among the generated two or more reconstructed task procedure sentences.

Thereafter, the scenario conversion apparatus 130 generates a second automation scenario based on the second automation solution, based on the one or more reconstructed task procedure sentences and action specification information for the mapping action of each of the one or more reconstructed task procedure sentences (1130).

It should be noted that at least some of the steps in the flowchart shown in FIG. 11 may be combined with and performed together with other steps, omitted, divided into sub-steps and performed, or one or more steps not shown may be added and performed.

FIG. 12 is a flowchart illustrating a task procedure sentence generation method according to one embodiment.

The method shown in FIG. 12 may be performed at step 1110 shown in FIG. 11.

Referring to FIG. 12, the scenario conversion apparatus 130 extracts, from the first automation scenario, action information and property information for each of the plurality of original actions (1210).

Thereafter, the scenario conversion apparatus 130 generates a first prompt requesting generation of task procedure sentences corresponding to respective ones of the plurality of original actions based on the extracted action information and the property information (1220).

Thereafter, the scenario conversion apparatus 130 provides the first prompt to the first generative AI model to obtain, from the first generative AI model, task procedure sentences generated based on the first prompt (1230).

It should be noted that at least some of the steps in the flowchart shown in FIG. 12 may be combined with and performed together with other steps, omitted, divided into sub-steps and performed, or one or more steps not shown may be added and performed.

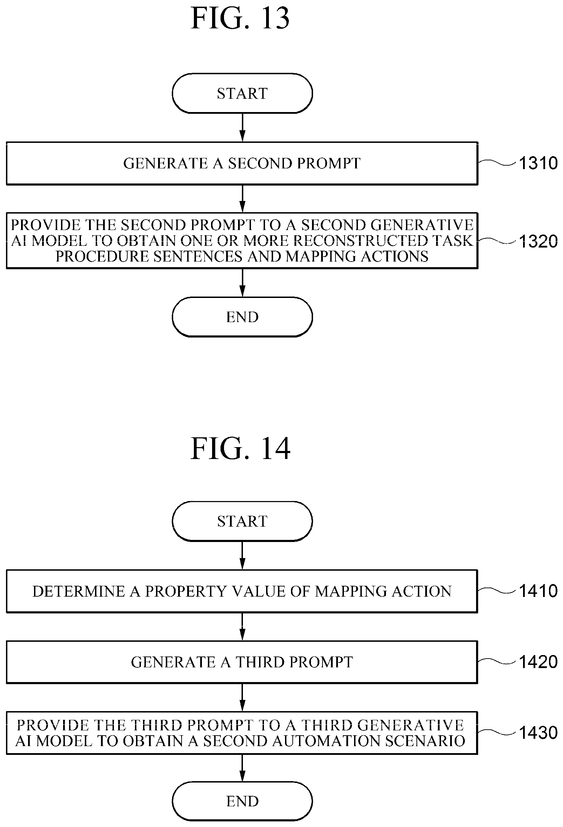

FIG. 13 is a flowchart illustrating a reconstructed task procedure sentence generation and mapping action determination method according to one embodiment.

The method shown in FIG. 13 may be performed at, for example, step 1120 shown in FIG. 11.

Referring to FIG. 13, the scenario conversion apparatus 130 generates a second prompt requesting generation of one or more reconstructed task procedure sentences and determination of a mapping action for each of the one or more reconstructed task procedure sentences from among the plurality of target actions, based on action specification information for a plurality of target actions defined in the second automation solution and task procedure sentences corresponding to respective ones of the plurality of original actions included in the first automation scenario (1310).

Thereafter, the scenario conversion apparatus 130 provides the second prompt to the second generative AI model to obtain, from the second generative AI model, the one or more reconstructed task procedure sentences and the mapping action for each of the one or more reconstructed task procedure sentences, generated based on the second prompt (1320).

It should be noted that at least some of the steps in the flowchart shown in FIG. 13 may be combined with and performed together with other steps, omitted, divided into sub-steps and performed, or one or more steps not shown may be added and performed.

FIG. 14 is a flowchart illustrating a second automation scenario generation method according to one embodiment.

The method shown in FIG. 14 may be performed at, for example, step 1130 shown in FIG. 11.

Referring to FIG. 14, the scenario conversion apparatus 130 determines property values for one or more properties of each mapping action based on the one or more reconstructed task procedure sentences and action specification information for the mapping action corresponding to each of the one or more reconstructed task procedure sentences (1410).

Thereafter, the scenario conversion apparatus 130 generates a third prompt requesting generation of the second automation scenario based on each mapping action and the property values for one or more properties of each mapping action (1420).

Thereafter, the scenario conversion apparatus 130 provides the third prompt to the third generative AI model to obtain, from the third generative AI model, the second automation scenario generated based on the third prompt (1430).

It should be noted that at least some of the steps in the flowchart shown in FIG. 14 may be combined with and performed together with other steps, omitted, divided into sub-steps and performed, or one or more steps not shown may be added and performed.

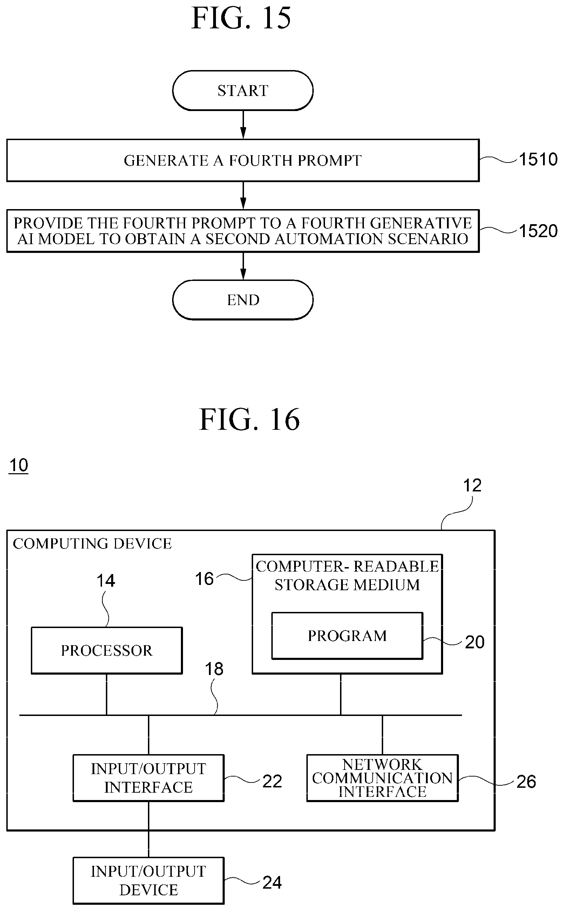

FIG. 15 is a flowchart illustrating a second automation scenario generation method according to another embodiment.

The method shown in FIG. 15 may be performed at, for example, step 1130 shown in FIG. 11.

Referring to FIG. 15, the scenario conversion apparatus 130 generates a fourth prompt requesting determination of property values for one or more properties of each mapping action based on the one or more reconstructed task procedure sentences and action specification information for the mapping action corresponding to each of the one or more reconstructed task procedure sentences, and generation of the second automation scenario based on each mapping action and the property values for the one or more properties of each mapping action (1510).

Thereafter, the scenario conversion apparatus 130 provides the fourth prompt to the fourth generative AI model to obtain, from the fourth generative AI model, the second automation scenario generated based on the fourth prompt (1520).

It should be noted that at least some of the steps in the flowchart shown in FIG. 15 may be combined with and performed together with other steps, omitted, divided into sub-steps and performed, or one or more steps not shown may be added and performed.

FIG. 16 is a block diagram for illustrating a computing environment that includes a computing device according to an embodiment.

In the illustrated embodiment, each component may have different functions and capabilities in addition to those described below, and additional components may be included in addition to those described below.

The illustrated computing environment 10 includes a computing device 12. In one embodiment, the computing device 12 may be one or more components included in the scenario conversion apparatus 130 illustrated in FIG. 2.

The computing device 12 includes at least one processor 14, a computer-readable storage medium 16 and a communication bus 18. The processor 14 may cause the computing device 12 to operate according to the exemplary embodiment described above. For example, the processor 14 may execute one or more programs stored on the computer-readable storage medium 16. The one or more programs may include one or more computer-executable instructions, which, when executed by the processor 14, may be configured such that the computing device 12 performs operations according to the exemplary embodiment. Meanwhile, according to one embodiment, the one or more processors 14 may comprise at least one of a Central Processing Unit (CPU), a Graphics Processing Unit (GPU), and a Neural Processing Unit (NPU), but are not necessarily limited thereto.

The computer-readable storage medium 16 is configured such that the computer-executable instruction or program code, program data, and/or other suitable forms of information are stored. A program 20 stored in the computer-readable storage medium 16 includes a set of instructions executable by the processor 14. In one embodiment, the computer-readable storage medium 16 may be a memory (volatile memory such as a random access memory, non-volatile memory, or any suitable combination thereof), one or more magnetic disk storage devices, optical disk storage devices, flash memory devices, other types of storage media that are accessible by the computing device 12 and capable of storing desired information, or any suitable combination thereof.

The communication bus 18 interconnects various other components of the computing device 12, including the processor 14 and the computer-readable storage medium 16.

The computing device 12 may also include one or more input/output interfaces 22 that provide an interface for one or more input/output devices 24, and one or more network communication interfaces 26. The input/output interface 22 and the network communication interface 26 are connected to the communication bus 18. The input/output device 24 may be connected to other components of the computing device 12 through the input/output interface 22. The exemplary input/output device 24 may include a pointing device (such as a mouse or trackpad), a keyboard, a touch input device (such as a touch pad or touch screen), a voice or sound input device, input devices such as various types of sensor devices and/or photographing devices, and/or output devices such as a display device, a printer, a speaker, and/or a network card. The exemplary input/output device 24 may be included inside the computing device 12 as a component constituting the computing device 12, or may be connected to the computing device 12 as a separate device distinct from the computing device 12.

Meanwhile, an embodiment of the present invention may comprise a program for performing the methods described herein on a computer, and a computer-readable recording medium comprising the program. The computer-readable recording medium may comprise program commands, local data files, local data structures, etc. alone or in combination. The medium may be one specially designed and configured for the present invention, or one commonly available in the field of computer software. Examples of the computer-readable recording medium include magnetic media such as hard disks, floppy disks, and magnetic tapes, optical recording media such as CD-ROMs and DVDs, and hardware devices specially configured to store and execute program commands such as ROMs, RAMs, and flash memories. Examples of the program may include not only machine language code such as that produced by a compiler, but also high-level language code executable by a computer using an interpreter or the like.

Although the present disclosure has been described in detail through representative examples above, those skilled in the art to which the present disclosure pertains will understand that various modifications may be made thereto within the limits that do not depart from the scope of the present disclosure. Therefore, the scope of rights of the present disclosure should not be limited to the described embodiments, but should be defined not only by claims set forth below but also by equivalents of the claims.

## Claims

1. A method for converting an automation scenario, performed by one or more processors, the method comprising:
generating task procedure sentences in natural language corresponding to respective ones of a plurality of original actions included in a first automation scenario based on a first automation solution;
generating one or more reconstructed task procedure sentences based on action specification information for a plurality of target actions defined in a second automation solution and the task procedure sentences;
determining, from among the plurality of target actions, a mapping action for each of the one or more reconstructed task procedure sentences; and
generating, based on the one or more reconstructed task procedure sentences and the action specification information for the mapping action, a second automation scenario based on the second automation solution.

2. The method of claim 1, wherein the generating of the task procedure sentences comprises:
extracting, from the first automation scenario, action information and property information for each of the plurality of original actions; and
generating the task procedure sentences corresponding to respective ones of the plurality of original actions based on the action information and the property information,
wherein the action information comprises at least one of an action identifier and an action description sentence, and the property information comprises a property identifier and a property value,
wherein the generating of the task procedure sentences comprises:
generating a first prompt requesting generation of the task procedure sentences corresponding to respective ones of the plurality of original actions based on the action information and the property information for each of the plurality of original actions; and
providing the first prompt to a first generative artificial intelligence (AI) model to obtain, from the first generative AI model, the task procedure sentences generated based on the first prompt.

3. The method of claim 1, wherein each of the one or more reconstructed task procedure sentences is a sentence reconstructed from the task procedure sentences based on action specification information for a specific target action among the plurality of target actions, so as to represent, in natural language, a task procedure performed by the specific target action.

4. The method of claim 1, wherein the determining comprises at least one of:
(i) when a task procedure to be performed according to a specific task procedure sentence, among the task procedure sentences corresponding to respective ones of the plurality of original actions, is performable using a specific target action among the plurality of target actions, generating one reconstructed task procedure sentence based on the specific task procedure sentence and action specification information for the specific target action, and determining the specific target action as the mapping action for the one reconstructed task procedure sentence;
(ii) when two or more task procedures to be performed according to each of two or more task procedure sentences, among the task procedure sentences corresponding to respective ones of the plurality of original actions, are performable using a specific target action among the plurality of target actions, generating one reconstructed task procedure sentence based on the two or more task procedure sentences and action specification information for the specific target action, and determining the specific target action as the mapping action for the one reconstructed task procedure sentence; and
(iii) when a task procedure to be performed according to a specific task procedure sentence, among the task procedure sentences corresponding to respective ones of the plurality of original actions, is performable using two or more target actions among the plurality of target actions, generating two or more reconstructed task procedure sentences corresponding to the two or more target actions based on the specific task procedure sentence and action specification information for each of the two or more target actions, and determining each of the two or more target actions as the mapping action for the corresponding reconstructed task procedure sentence among the generated two or more reconstructed task procedure sentences.

5. The method of claim 1, wherein the determining comprises:
generating a second prompt requesting generation of the one or more reconstructed task procedure sentences and determination of the mapping action for each of the one or more reconstructed task procedure sentences from among the plurality of target actions, based on the action specification information for the plurality of target actions and the task procedure sentences corresponding to respective ones of the plurality of original actions; and
providing the second prompt to a second generative AI model to obtain, from the second generative AI model, the one or more reconstructed task procedure sentences and the mapping action generated based on the second prompt.

6. The method of claim 1, wherein the generating of the second automation scenario comprises:
determining property values for one or more properties of the mapping action based on the one or more reconstructed task procedure sentences and the action specification information for the mapping action; and
generating the second automation scenario based on the mapping action and the determined property values,
wherein the property values for the one or more properties of the mapping action comprise at least one of a property value extracted from a reconstructed task procedure sentence corresponding to the mapping action and a default property value included in the action specification information for the mapping action,
wherein the generating of the second automation scenario based on the mapping action and the determined property values comprises:
generating a third prompt requesting generation of the second automation scenario based on the mapping action and the determined property values; and
providing the third prompt to a third generative AI model to obtain, from the third generative AI model, the second automation scenario generated based on the third prompt.

7. The method of claim 1, wherein the generating of the second automation scenario comprises:
generating a fourth prompt requesting determination of property values for one or more properties of the mapping action based on the one or more reconstructed task procedure sentences and the action specification information for the mapping action, and generation of the second automation scenario based on the mapping action and the property values for the one or more properties; and
providing the fourth prompt to a fourth generative AI model to obtain, from the fourth generative AI model, the second automation scenario generated based on the fourth prompt.

8. An apparatus for converting an automation scenario, comprising:
one or more memories; and
one or more processors,
wherein the one or more processors are configured to:
generate task procedure sentences in natural language corresponding to respective ones of a plurality of original actions included in a first automation scenario based on a first automation solution;
generate one or more reconstructed task procedure sentences based on action specification information for a plurality of target actions defined in a second automation solution and the task procedure sentences;
determine, from among the plurality of target actions, a mapping action for each of the one or more reconstructed task procedure sentences; and
generate, based on the one or more reconstructed task procedure sentences and the action specification information for the mapping action, a second automation scenario based on the second automation solution.

9. The apparatus of claim 8, wherein the one or more processors are further configured to:
extract, from the first automation scenario, action information and property information for each of the plurality of original actions; and
generate the task procedure sentences corresponding to respective ones of the plurality of original actions based on the action information and the property information,
wherein the action information comprises at least one of an action identifier and an action description sentence, and the property information comprises a property identifier and a property value,
wherein the one or more processors are further configured to:
generate a first prompt requesting generation of the task procedure sentences corresponding to respective ones of the plurality of original actions based on the action information and the property information for each of the plurality of original actions; and
provide the first prompt to a first generative artificial intelligence (AI) model to obtain, from the first generative AI model, the task procedure sentences generated based on the first prompt.

10. The apparatus of claim 8, wherein each of the one or more reconstructed task procedure sentences is a sentence reconstructed from the task procedure sentences based on action specification information for a specific target action among the plurality of target actions, so as to represent, in natural language, a task procedure performed by the specific target action.

11. The apparatus of claim 8, wherein the one or more processors are further configured to, at least one of:
(i) when a task procedure to be performed according to a specific task procedure sentence, among the task procedure sentences corresponding to respective ones of the plurality of original actions, is performable using a specific target action among the plurality of target actions, generate one reconstructed task procedure sentence based on the specific task procedure sentence and action specification information for the specific target action, and determine the specific target action as the mapping action for the one reconstructed task procedure sentence;
(ii) when two or more task procedures to be performed according to each of two or more task procedure sentences, among the task procedure sentences corresponding to respective ones of the plurality of original actions, are performable using a specific target action among the plurality of target actions, generate one reconstructed task procedure sentence based on the two or more task procedure sentences and action specification information for the specific target action, and determine the specific target action as the mapping action for the one reconstructed task procedure sentence; and
(iii) when a task procedure to be performed according to a specific task procedure sentence, among the task procedure sentences corresponding to respective ones of the plurality of original actions, is performable using two or more target actions among the plurality of target actions, generate two or more reconstructed task procedure sentences corresponding to the two or more target actions based on the specific task procedure sentence and action specification information for each of the two or more target actions; and
determine each of the two or more target actions as the mapping action for the corresponding reconstructed task procedure sentence among the generated two or more reconstructed task procedure sentences.

12. The apparatus of claim 8, wherein the one or more processors are further configured to:
generate a second prompt requesting generation of the one or more reconstructed task procedure sentences and determination of the mapping action for each of the one or more reconstructed task procedure sentences from among the plurality of target actions, based on the action specification information for the plurality of target actions and the task procedure sentences corresponding to respective ones of the plurality of original actions; and
provide the second prompt to a second generative AI model to obtain, from the second generative AI model, the one or more reconstructed task procedure sentences and the mapping action generated based on the second prompt.

13. The apparatus of claim 8, wherein the one or more processors are further configured to:
determine property values for one or more properties of the mapping action based on the one or more reconstructed task procedure sentences and the action specification information for the mapping action; and
generate the second automation scenario based on the mapping action and the determined property values,
wherein the property values for the one or more properties of the mapping action comprise at least one of a property value extracted from a reconstructed task procedure sentence corresponding to the mapping action and a default property value included in the action specification information for the mapping action, wherein the one or more processors are further configured to:
generate a third prompt requesting generation of the second automation scenario based on the mapping action and the determined property values; and
provide the third prompt to a third generative AI model to obtain, from the third generative AI model, the second automation scenario generated based on the third prompt.

14. The apparatus of claim 8, wherein the one or more processors are further configured to:
generate a fourth prompt requesting determination of property values for one or more properties of the mapping action based on the one or more reconstructed task procedure sentences and the action specification information for the mapping action, and generation of the second automation scenario based on the mapping action and the property values for the one or more properties; and
provide the fourth prompt to a fourth generative AI model to obtain, from the fourth generative AI model, the second automation scenario generated based on the fourth prompt.
